# EUROPEAN PATENT SPECIFICATION

(11) **EP 2 380 750 B1**
(45) Date of publication and mention of the grant of the patent: **04.09.2013**
(21) Application number: 11162848.3
(22) Date of filing: 18.04.2011
(51) Int. Cl.: B60B 27/00

(54) **A wheel hub assembly with a dual row of rolling bodies**
Radnabenanordnung mit Wälzkörpern in zwei Reihen
Ensemble moyeu de roue à corps de roulement à double rangée

(30) Priority: 20.04.2010 IT TO20100327
(43) Date of publication of application: 26.10.2011
(73) Proprietor: Aktiebolaget SKF, 415 50 Göteborg (SE)
(72) Inventor: Ciulla, Luca, I-10137, TORINO (IT)
(74) Representative: Tedeschini, Luca

(56) References cited:
- WO-A1-2005/008085
- US-A1- 2005 111 771
- US-A1- 2009 052 823
- US-A1- 2009 232 435

## Description

The present invention relates to a wheel hub assembly with a dual row of rolling bodies.

Wheel hub assemblies with two rows of rolling bodies have an axis of rotation and comprise an inner ring and an outer ring arranged coaxially with and externally to the inner ring and, for each row of rolling bodies, an inner raceway and an outer raceway obtained, respectively, on the outside of the inner ring and on the inside of the outer ring in positions axially staggered with respect to one another to permit the wheel hub assembly to support combined loads, i.e. loads that act simultaneously in a radial direction and in an axial direction.

The wheel hub assemblies of the type described above are used in countless applications in the automobile field, and have undergone substantial structural modifications up to the incorporation in the inner and outer rings of flanges connecting to the wheels and chassis, thereby contributing to the creation of compact and light structures, as well as guaranteeing both simplified assembly, and increasingly greater reliability.

Due to increasingly restrictive anti-pollution regulations that have come into effect in recent years, it has been necessary to study technological solutions aimed, even indirectly, at reducing the energy consumption of automobiles and emissions noxious for the environment such as, for example, carbon monoxide emissions.

US 2009/232435 A1 discloses a wheel hub assembly as defined in the preamble of claim 1.

The object of the present invention is to provide a wheel hub assembly with two rows of rolling bodies which, while maintaining high mechanical characteristics and reliability, permits a significant reduction of consumption and of pollutant emissions.

According to the present invention, there is provided a wheel hub assembly having the features set forth in claim 1. Preferred embodiments are defined in the dependent claims.

The invention will now be described with reference to the attached drawings which illustrate a few non-limiting embodiments, in which:
- figure 1 illustrates, in cross section, a first preferred embodiment of a wheel hub assembly with two rows of rolling bodies according to the present invention; and
- figure 2 illustrates, in cross section, a second preferred embodiment of a wheel hub assembly with two rows of rolling bodies of figure 1.

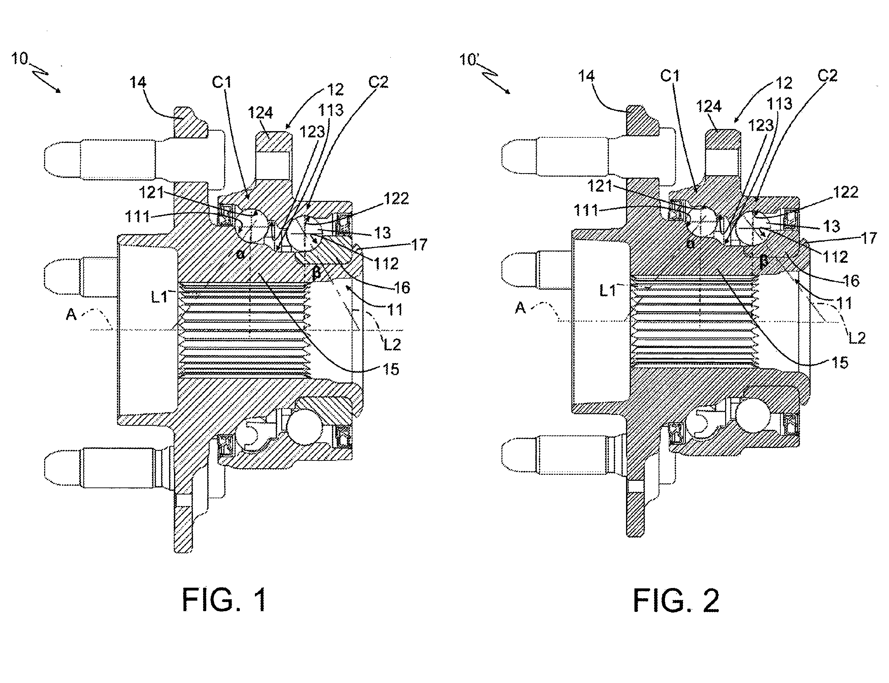

With reference to figure 1, 10 as a whole indicates a wheel hub assembly with an axis A of rotation and comprising an inner ring 11 and an outer ring 12 coaxial with respect to one another and to the axis of rotation and which revolve with respect to one another because of the interposition between them of two rows C1, C2 of rolling bodies 13. In this example, the rolling bodies 13 are balls, the centres of which are arranged along respective pitch diameters P1, P2.

Furthermore, the assembly 10 comprises, for each row C1 and C2, an inner raceway 111, 112 and an outer raceway 121, 122 arranged in axially staggered positions to permit the assembly 10 to support combined loads, which act simultaneously both in the radial direction and in the axial direction, and are transmitted between balls 13 and inner raceways 111, 112 and between balls 13 and outer raceways 121, 122 along respective load lines L1, L2. In particular, the load lines L1, L2 join the points of contact between the balls 13 of each row C1, C2 with the associated inner raceways 111, 112 and the associated outer raceways 121, 122, and form respective angles α and β of contact with respective lines perpendicular to the axis A on a radial plane.

The inner raceways 111, 112 are obtained outside the inner ring 11, while the outer raceways 121, 122 are obtained directly on an inner surface 123 of the outer ring 12 which, in the exemplary embodiment illustrated, is also provided with an outer flange 124 for fastening the assembly 10 to a vehicle.

The inner ring 11 is an inner flanged ring to permit the attachment of a wheel to the assembly 10, and comprises:
- a flange 14 transversal to the axis A of rotation,
- a spindle 15 that extends along the axis A of rotation and is made of the same material as the flange 14, and
- an applied inner ring 16, which is fitted on the spindle 15, and is axially blocked by a rolled edge 17.

The flange 14 and the ring 16 define, for the assembly 10, the so-called "outboard side" and, respectively, the "inboard side", and the inner raceway 111 of the row C1 is obtained directly on an outer surface 113 of the spindle 15 in the vicinity of the flange 14, while the inner raceway 112 of the row C2 is obtained directly on the insert ring 16. Alternatively, according to an embodiment that is not illustrated, the inner raceway 111 of row C1 can be obtained directly on a respective insert ring at an intermediate position between the flange 14 and the ring 16 and axially blocked by the flange 14 and ring 16.

In the exemplary embodiment illustrated, the dimensions of the pitch diameter P1 of the row C1 are greater than those of the pitch diameter P2 of row C2, but everything disclosed in this description can also be advantageously applied to a wheel hub assembly in which the dimensions of the pitch diameter P1 of the row C1 are the same as the dimensions of the pitch diameter P2 of the row C2. For the sake of clarity, it is nevertheless worth underlining that an asymmetrical wheel hub assembly with a pitch diameter P1 of the row C1, i.e. of the "outboard side" row, that is greater than the pitch diameter P2 of the row C2, i.e. of the row on the "inboard side", has, with all the other dimensions being the same, greater rigidity than a symmetrical wheel hub assembly in which the dimensions of the pitch diameters of P1 and P2 are the same.

The raceways 111, 112, 121, 122 have respective osculations O_{xy} defined by the ratio between the radiuses r of curvature of the raceways 111, 112, 121, 122 and the outer diameters Φ1, Φ2 of the balls 13 of each row C1, C2. In other words, the following osculations are obtained:
O_{OE}: ratio between the radius of curvature of the outer raceway 121, outboard side, with the outer diameter Φ1;
O_{IE}: ratio between the radius of curvature of the outer raceway 122, inboard side, with the outer diameter Φ2;
O_{OI}: ratio between the radius of curvature of the inner raceway 111, outboard side, and the outer diameter Φ1;
O_{II}: ratio between the radius of curvature of the inner raceway 112, inboard side, and the outer diameter Φ2.

In the wheel hub assembly 10, the osculations O_{0E} and O_{OI} of the row C1 are different from the respective osculations O_{IE} and O_{II} of the row C2. The best performance in terms of reduction of friction is obtained when the wheel hub assembly 10 is made according to any one of the following geometrical conditions:
1) O_{OE} > O_{IE}; or
2) O_{OI} > O_{II}; or
3) O_{OE} > O_{IE} and O_{OI} > O_{II}.

In particular it was found that the optimum conditions in terms of reduction of friction are obtained when the wheel hub assembly 10 is made according to any one of the following geometrical conditions:
1) O_{OE} > 1.004 O_{IE}; or
2) O_{OI} > 1. 004 O_{II}; or
3) O_{OE} > 1.004 O_{IE} and O_{OI} > 1.004 O_{II}.

The different osculation of the outboard side compared with the inboard side can be obtained both by varying the radiuses of curvature of the associated raceways 111, 121 of the outboard side compared with the radiuses of curvature of the raceways 112, 122 at the inboard side, or by varying the outer diameters Φ1, Φ2 of the balls 13. In other words, the different osculation of the outboard side compared with the inboard side can be obtained by making a wheel hub assembly 10' as alternatively illustrated in figure 2, in which the outer diameters Φ1 of the balls 13 of the row C1 do not have the same dimensions as the dimensions of the outer diameters Φ2 of the balls 13 of the row C2, as in the exemplary embodiment described above, but in which the outer diameters Φ1 of the balls 13 of the row C1 are smaller than the dimensions of the outer diameters Φ2 of the balls 13 of the row C2.

Furthermore, the reduction of the outer diameters Φ1 of the balls 13 entails, with the same dynamic and structural conditions described above, a reduction of the tangential velocities between the balls 13 and raceways and, therefore, a reduction of the friction.

In the exemplary embodiments illustrated, the variation of the osculations of the inboard side compared with the outboard side according to what has been described above leads to a reduction of slipping between the balls 13 and the associated raceways 111, 112, 121, 122 and, therefore, leads to a reduction of the friction between rolling bodies and raceways. The reduction of friction obtained by differentiating the osculations reduces a possible source of dissipation of energy and, as a consequence, reduces the consumption and pollutant emissions of vehicles on which the wheel hub assembly 10, or 10', is used.

Therefore, since what has been described above can also be advantageously applied to a symmetrical wheel hub assembly in which the dimensions of the pitch diameter P1 of the row C1 are the same as the dimensions of the pitch diameter P2 of the row C2, it should also be understood that the above can be applied advantageously to an asymmetrical wheel hub assembly in which, however, the dimensions of the pitch diameter P1 of the row C1 are smaller than the dimensions of the pitch diameter P2 of the row C2.

It is intended that the invention not be limited to the embodiments described and illustrated here, which are to be considered as examples of a wheel hub assembly with two rows of rolling bodies; rather, the invention is open to further modifications as regards shapes and arrangements of parts, and constructional and assembly details.

## Claims

1. A wheel hub assembly (10)(10') with double rows (C1, C2) of rolling bodies (13), the wheel hub assembly having an axis (A) of rotation and comprising, for each row (C1)(C2) of rolling bodies (13), an inner raceway (111, 112) and an outer raceway (121, 122), which are axially arranged in accordance with a respective angle of contact and along a respective load line (L1, L2) in order to allow the assembly to support combined loads, the raceways of each row (C1)(C2) of rolling bodies (13) being provided with respective osculations which are defined by the ratio between the radius of the raceways and the outer diameters of the rolling bodies (13) of the associated row of rolling bodies (13), wherein the osculations of a first row (C1) of rolling bodies (13) of the two rows (C1, C2) of rolling bodies (13) are different from the osculations of a second row (C2) of rolling bodies (13) of the two rows (C1, C2) of rolling bodies (13); **characterized in that** the osculation of the outer raceway (121) of the first, outboard side row (C1) of rolling bodies (13) has a value which is greater than the value of the osculation of the outer raceway (122) of the second, inboard side row (C2) of rolling bodies (13).

2. A wheel hub assembly according to Claim 1, **characterized in that** the osculation of the outer raceway (121) of the first row (C1) of rolling bodies (13) is 1.004 times greater than the osculation of the outer raceway (122) of the second row (C2) of rolling bodies (13).

3. A wheel hub assembly according to Claim 1 or 2, **characterized in that** the osculation of the inner raceway (111) of the first row (C1) of rolling bodies (13) has a value which is greater than the value of the osculation of the inner raceway (112) of the second row (C2) of rolling bodies (13).

4. A wheel hub assembly according to Claim 3, **characterized in that** the osculation of the inner raceway (111) of the first row (C1) of rolling bodies (13) is 1.004 times greater than the osculation of the inner raceway (112) of the second row (C2) of rolling bodies (13).

5. A wheel hub assembly according to Claim 2 or 4, **characterized in that** the outer diameters of the rolling bodies (13) of the first row (C1) of rolling bodies (13) have sizes which are equal to the sizes of the outer diameters of the rolling bodies (13) of the second row (C2) of rolling bodies (13).

6. A wheel hub assembly according to Claim 2 or 4, **characterized in that** the outer diameters of the rolling bodies (13) of the first row (C1) of rolling bodies (13) have sizes which are smaller than the sizes of the outer diameters of the rolling bodies (13) of the second row (C2) of rolling bodies (13).

7. A wheel hub assembly according to Claim 6, **characterized in that** the pitch diameter (P1) of the first row (C1) of rolling bodies (13) is equal to the pitch diameter of the second row (C2) of rolling bodies (13).

8. A wheel hub assembly according to Claim 6, **characterized in that** the pitch diameter (P1) of the first row (C1) of rolling bodies (13) is greater than the pitch diameter (P2) of the second row (C2) of rolling bodies (13).

9. A wheel hub assembly according to Claim 7 or 8, **characterized in that** it is also comprises an inner ring (11) and an outer ring (12) which are coaxial with respect to one another and to the axis (A) of rotation and which revolve with respect to one another other due to the interposition of the two rows (C1, C2) of rolling bodies (13); the inner raceway (111, 112) and the outer raceway (121, 122) of each row (C1)(C2) of rolling bodies (13) being obtained externally to the inner ring (11) and, respectively, internally to the outer ring (12).

10. A wheel hub assembly according to Claim 9, **characterized in that** the inner ring (11) is a flanged ring (11) and it is provided with a flange (14) which is transversal to the axis (A) of rotation for fitting a wheel.

11. A wheel hub assembly according to Claim 10, **characterized in that** the inner raceway (111) of the first row (C1) of rolling bodies (13) is directly obtained on the outside of the inner ring (11) and close to the flange (14).

12. A wheel hub assembly according to Claim 11, **characterized in that** the inner ring (11) comprises a spindle (15), which extends along the axis (A) of rotation and is made of the same material as the flange (14); the inner raceway (111) of the first row (C1) of rolling bodies (13) being directly obtained on an outer surface of the spindle (15).

13. A wheel hub assembly according to Claim 12, **characterized in that** the inner ring (11) also comprises an applied inner ring (16) which is fitted on the spindle (15); the inner raceway (112) of the second row (C2) of rolling bodies (13) being directly obtained on the applied inner ring (16).

14. A wheel hub assembly according to Claim 13, **characterized in that** the outer raceways of the first and of the second row (C2) of rolling bodies (13) are directly obtained on an inner surface of the outer ring (12).

## Patentansprüche

1. Radnabenanordnung (10) (10') mit Doppelreihen (C1, C2) von Wälzkörpern (13), wobei die Radnabenanordnung eine Drehachse (A) aufweist und für jede Reihe (C1) (C2) von Wälzkörpern (13) eine Innenlaufbahn (111, 112) und eine Außenlaufbahn (121, 122) aufweist, welche axial entsprechend einem jeweiligen Kontaktwinkel und entlang einer jeweiligen Lastlinie (L1, L2) angeordnet sind, um zu ermöglichen, dass die Anordnung kombinierte Lasten trägt, wobei die Laufbahnen jeder Reihe (C1) (C2) von Wälzkörpern (13) mit jeweiligen Schmiegungen versehen sind, welche durch das Verhältnis zwischen dem Radius der Laufbahnen und den Außendurchmessern der Wälzkörper (13) der zugeordneten Reihe von Wälzkörpern (13) definiert sind, wobei die Schmiegungen einer ersten Reihe (C1) von Wälzkörpern (13) von den zwei Reihen (C1, C2) von Wälzkörpern (13) von den Schmiegungen einer zweiten Reihe (C2) von Wälzkörpern (13) von den zwei Reihen (C1, C2) von Wälzkörpern (13) verschieden sind;
**dadurch gekennzeichnet, dass** die Schmiegung der Außenlaufbahn (121) der ersten, außenseitigen Reihe (C1) von Wälzkörpern (13) einen Wert hat, welcher größer als der Wert der Schmiegung der Außenlaufbahn (122) der zweiten, innenseitigen Reihe (C2) von Wälzkörpern (13) ist.

2. Radnabenanordnung nach Anspruch 1, **dadurch gekennzeichnet, dass** die Schmiegung der Außenlaufbahn (121) der ersten Reihe (C1) von Wälzkörpern (13) 1,004-mal größer als die Schmiegung der Außenlaufbahn (122) der zweiten Reihe (C2) von Wälzkörpern (13) ist.

3. Radnabenanordnung nach Anspruch 1 oder 2, **dadurch gekennzeichnet, dass** die Schmiegung der Innenlaufbahn (111) der ersten Reihe (C1) von Wälzkörpern (13) einen Wert hat, welcher größer als der Wert der Schmiegung der Innenlaufbahn (112) der zweiten Reihe (C2) von Wälzkörpern (13) ist.

4. Radnabenanordnung nach Anspruch 3, **dadurch gekennzeichnet, dass** die Schmiegung der Innenlaufbahn (111) der ersten Reihe (C1) von Wälzkörpern (13) 1,004-mal größer als die Schmiegung der Innenlaufbahn (112) der zweiten Reihe (C2) von Wälzkörpern (13) ist.

5. Radnabenanordnung nach Anspruch 2 oder 4, **dadurch gekennzeichnet, dass** die Außendurchmesser der Wälzkörper (13) der ersten Reihe (C1) von Wälzkörpern (13) Größen aufweisen, welche gleich den Größen der Außendurchmesser der Wälzkörper (13) der zweiten Reihe (C2) von Wälzkörpern (13) sind.

6. Radnabenanordnung nach Anspruch 2 oder 4, **dadurch gekennzeichnet, dass** die Außendurchmesser der Wälzkörper (13) der ersten Reihe (C1) von Wälzkörpern (13) Größen aufweisen, welche kleiner als die Größen der Außendurchmesser der Wälzkörper (13) der zweiten Reihe (C2) von Wälzkörpern (13) sind.

7. Radnabenanordnung nach Anspruch 6, **dadurch gekennzeichnet, dass** der Wälzkreisdurchmesser (P1) der ersten Reihe (C1) von Wälzkörpern (13) gleich dem Wälzkreisdurchmesser der zweiten Reihe (C2) von Wälzkörpern (13) ist.

8. Radnabenanordnung nach Anspruch 6, **dadurch gekennzeichnet, dass** der Wälzkreisdurchmesser (P1) der ersten Reihe (C1) von Wälzkörpern (13) größer als der Wälzkreisdurchmesser (P2) der zweiten Reihe (C2) von Wälzkörpern (13) ist.

9. Radnabenanordnung nach Anspruch 7 oder 8, **dadurch gekennzeichnet, dass** sie außerdem einen Innenring (11) und einen Außenring (12) aufweist, welche koaxial zueinander und zu der Drehachse (A) sind und welche sich aufgrund der zwischen ihnen angeordneten zwei Reihen (C1, C2) von Wälzkörpern (13) relativ zueinander drehen; wobei die Innenlaufbahn (111, 112) und die Außenlaufbahn (121, 122) jeder Reihe (C1) (C2) von Wälzkörpern (13) außen in Bezug auf den Innenring (11) bzw. innen in Bezug auf den Außenring (12) erhalten werden.

10. Radnabenanordnung nach Anspruch 9, **dadurch gekennzeichnet, dass** der Innenring (11) ein Flanschring (11) ist und mit einem Flansch (14) versehen ist, welcher quer zu der Drehachse (A) ausgebildet ist, zur Anbringung eines Rades.

11. Radnabenanordnung nach Anspruch 10, **dadurch gekennzeichnet, dass** die Innenlaufbahn (111) der ersten Reihe (C1) von Wälzkörpern (13) unmittelbar an der Außenseite des Innenringes (11) und in der Nähe des Flansches (14) erhalten wird.

12. Radnabenanordnung nach Anspruch 11, **dadurch gekennzeichnet, dass** der Innenring (11) eine Spindel (15) aufweist, welche sich entlang der Drehachse (A) erstreckt und aus demselben Material wie der Flansch (14) hergestellt ist; wobei die Innenlaufbahn (111) der ersten Reihe (C1) von Wälzkörpern (13) unmittelbar an einer Außenfläche der Spindel (15) erhalten wird.

13. Radnabenanordnung nach Anspruch 12, **dadurch gekennzeichnet, dass** der Innenring (11) außerdem einen aufgesetzten Innenring (16) aufweist, welcher auf der Spindel (15) montiert ist; wobei die Innenlaufbahn (112) der zweiten Reihe (C2) von Wälzkörpern (13) unmittelbar an dem aufgesetzten Innenring (16) erhalten wird.

14. Radnabenanordnung nach Anspruch 13, **dadurch gekennzeichnet, dass** die Außenlaufbahnen der ersten und der zweiten Reihe (C2) von Wälzkörpern (13) unmittelbar an einer Innenfläche des Außenringes (12) erhalten werden.

## Revendications

1. Ensemble de moyeu de roue (10) (10') comprenant une double rangée (C1, C2) de corps de roulement (13), l'ensemble de moyeu de roue ayant un axe (A) de rotation et comprenant, pour chaque rangée (C1) (C2) de corps de roulement (13), un chemin de roulement interne (111, 112) et un chemin de roulement externe (121, 122), qui sont disposés axialement en fonction d'un angle de contact respectif et le long d'une ligne de contraintes respective (L1, L2) afin de permettre à l'ensemble de supporter des charges combinées, les chemins de roulement de chaque rangée (C1) (C2) de corps de roulement (13) étant pourvus d'osculations respectives qui sont définies par le rapport entre le rayon des chemins de roulement et les diamètres extérieurs des corps de roulement (13) de la rangée associée de corps de roulement (13), les osculations d'une première rangée (C1) de corps de roulement (13) des deux rangées (C1, C2) de corps de roulement (13) étant différentes des osculations d'une deuxième rangée (C2) de corps de roulement (13) des deux rangées (C1, C2) de corps de roulement (13);
**caractérisé en ce que** l'osculation du chemin de roulement externe (121) de la première rangée latérale extérieure (C1) de corps de roulement (13) présente une valeur qui est supérieure à la valeur de l'osculation du chemin de roulement externe (122) de la deuxième rangée latérale intérieure (C2) de corps de roulement (13).

2. Ensemble de moyeu de roue selon la revendication 1, **caractérisé en ce que** l'osculation du chemin de roulement externe (121) de la première rangée (C1) de corps de roulement (13) est 1,004 fois supérieure à l'osculation du chemin de roulement externe (122) de la deuxième rangée (C2) de corps de roulement (13).

3. Ensemble de moyeu de roue selon la revendication 1 ou 2, **caractérisé en ce que** l'osculation du chemin de roulement interne (111) de la première rangée (C1) de corps de roulement (13) présente une valeur qui est supérieure à la valeur de l'osculation du chemin de roulement interne (112) de la deuxième rangée (C2) de corps de roulement (13).

4. Ensemble de moyeu de roue selon la revendication 3, **caractérisé en ce que** l'osculation du chemin de roulement interne (111) de la première rangée (C1) de corps de roulement (13) est 1,004 fois supérieure à l'osculation du chemin de roulement interne (112) de la deuxième rangée (C2) de corps de roulement (13).

5. Ensemble de moyeu de roue selon la revendication 2 ou 4, **caractérisé en ce que** les diamètres extérieurs des corps de roulement (13) de la première rangée (C1) de corps de roulement (13) ont des dimensions qui sont égales aux dimensions des diamètres extérieurs des corps de roulement (13) de la deuxième rangée (C2) de corps de roulement (13).

6. Ensemble de moyeu de roue selon la revendication 2 ou 4, **caractérisé en ce que** les diamètres extérieurs des corps de roulement (13) de la première rangée (C1) de corps de roulement (13) ont des dimensions qui sont inférieures aux dimensions des diamètres extérieurs des corps de roulement (13) de la deuxième rangée (C2) de corps de roulement (13).

7. Ensemble de moyeu de roue selon la revendication 6, **caractérisé en ce que** le diamètre de pas (P1) de la première rangée (C1) de corps de roulement (13) est égal au diamètre de pas de la deuxième rangée (C2) de corps de roulement (13).

8. Ensemble de moyeu de roue selon la revendication 6, **caractérisé en ce que** le diamètre de pas (P1) de la première rangée (C1) de corps de roulement (13) est supérieur au diamètre de pas (P2) de la deuxième rangée (C2) de corps de roulement (13).

9. Ensemble de moyeu de roue selon la revendication 7 ou 8, **caractérisé en ce qu'**il comprend également une bague interne (11) et une bague externe (12) qui sont coaxiales l'une par rapport à l'autre et par rapport à l'axe (A) de rotation et qui tournent l'une par rapport à l'autre en raison de l'interposition des deux rangées (C1, C2) de corps de roulement (13) ; le chemin de roulement interne (111, 112) et le chemin de roulement externe (121, 122) de chaque rangée (C1) (C2) de corps de roulement (13) étant obtenus à l'extérieur de la bague interne (11) et, respectivement, à l'intérieur de la bague externe (12).

10. Ensemble de moyeu de roue selon la revendication 9, **caractérisé en ce que** la bague interne (11) est une bague bridée (11) et elle est munie d'une bride (14) transversale à l'axe (A) de rotation de manière à ajuster une roue.

11. Ensemble de moyeu de roue selon la revendication 10, **caractérisé en ce que** le chemin de roulement interne (111) de la première rangée (C1) de corps de roulement (13) est obtenu directement à l'extérieur de la bague interne (11) et à proximité de la bride (14).

12. Ensemble de moyeu de roue selon la revendication 11, **caractérisé en ce que** la bague interne (11) comprend une broche (15) qui s'étend le long de l'axe (A) de rotation et qui est fabriquée en le même matériau que la bride (14) ; le chemin de roulement interne (111) de la première rangée (C1) de corps de roulement (13) étant obtenu directement sur une surface extérieure de la broche (15).

13. Ensemble de moyeu de roue selon la revendication 12, **caractérisé en ce que** la bague interne (11) comprend également une bague interne appliquée (16) qui est montée sur la broche (15) ; le chemin de roulement interne (112) de la deuxième rangée (C2) de corps de roulement (13) étant obtenu directement sur la bague interne appliquée (16).

14. Ensemble de moyeu de roue selon la revendication 13, **caractérisé en ce que** les chemins de roulement externes de la première et de la deuxième rangée (C2) de corps de roulement (13) sont directement obtenus sur une surface intérieure de la bague externe (12).
